# EUROPEAN PATENT APPLICATION

(11) **EP 4 322 034 A1**
(43) Date of publication of application: **14.02.2024**
(21) Application number: 22306202.7
(22) Date of filing: 09.08.2022
(51) Int. Cl.: G06F 21/32, G06F 21/34, G06Q 20/34, G06Q 20/40, G06V 40/12, G07F 7/08, H04L 9/40, H04W 12/062, H04W 12/72

(54) **METHOD FOR MANAGING A BIOMETRIC PATTERN IN A CARD**

(71) Applicant: THALES DIS FRANCE SAS, 92190 Meudon (FR)
(72) Inventor: FAVREAU, Valentin, 92130 Issy les Moulineaux (FR); LELOUP, Laurent, 13124 Peypin (FR)
(74) Representative: Grevin, Emmanuel

(57) **Abstract**

The invention is a method for managing a biometric pattern (51) in a card (10) comprising:
- the card records the biometric pattern in its memory during an enrollment phase, then identifies a pattern orientation (61) of the biometric pattern;
- during a subsequent calibration phase:
- the card acquires a first data (52) of a finger and if the first data matches the biometric pattern, the card identifies a first orientation (81) of the first data, computes an angle offset (64) between the first orientation (81) and the pattern orientation (61), then uniquely assigns the angle offset to the calibration orientation (41);

- the card being configured to capture a second data during a subsequent presentation of a finger, if the second data matches the biometric pattern, to identify a second orientation (91) of the second data, the card being configured to consider that the second orientation (91) corresponds to the calibration orientation (41) only if the difference (94) between the second orientation (91) and the pattern orientation (61) is equal to the angle offset (64) plus or minus a predefined tolerance value (59) .

## Description

### (Field of the invention)

The present invention relates to methods for managing a biometric data captured by a card. It relates particularly to methods of handling orientation of a biometric data captured by a smart card.

### (Background of the invention)

Smart cards are portable small devices comprising a memory, a microprocessor and an operating system for computing treatments. They may comprise services applications like payment applications. Such secure elements may comprise a plurality of memories of different types, like non-volatile memory and volatile memory. They are considered as tamper-resistant (or "secure") because they are able to control the access to the data they contain and to authorize or not the use of their data by other machines. A smartcard may also provide computation services based on cryptographic components. In general, smartcards have limited computing resources and limited memory resources and they are intended to connect a host machine which provides them with electric power either in contact mode or contactless mode.

A smart card coupled to a terminal that comprises a card reader may execute one or more operations for performing a transaction with the terminal. Some transactions may depend on the orientation of the biometric data presented to the sensing area of the card.

### (Summary of the Invention)

There is need to enhance the way to compare direction of a freshly captured biometric data with a previously enrolled biometric pattern in a smart card.

The invention aims at solving the above mentioned technical problem.

An object of the present invention is a method for managing a biometric pattern in a card comprising a body, a fingerprint sensor and a memory. The method comprises the steps:
- the card records the biometric pattern in said memory during an enrollment phase;
- the card identifies a pattern orientation of the biometric pattern;
- during a calibration phase subsequent to the enrollment phase:
   - a user is asked to present a finger according to a calibration orientation with respect to said body and the card acquires a first biometric data of a presented finger;
   - the card performs a first checking to verify that the first biometric data matches the biometric pattern and only in case of successful first checking, the card identifies a first orientation of the first biometric data and computes an angle offset between the first orientation and the pattern orientation, then the card uniquely assigns the angle offset to the calibration orientation;
- the card being configured to capture a second biometric data during a subsequent presentation of a finger, to perform a second checking to verify that the second biometric data matches the biometric pattern and only in case of successful second checking, to identify a second orientation of the second biometric data, the card being configured to consider that the second orientation corresponds to the calibration orientation only if the difference between the second orientation and the pattern orientation is equal to the angle offset plus or minus a predefined tolerance value.

Advantageously, during the enrollment phase the card may capture a plurality of biometric data, build the biometric pattern from said plurality of biometric data and the card may identify the pattern orientation as the average orientation of the plurality of biometric data.

Advantageously, the card may comprise first and second options, said first option being uniquely associated with said calibration orientation and said second option being uniquely associated with a reference orientation different from the calibration orientation. The card may use said biometric pattern to authorize usage of the first option only if said second orientation of the subsequently presented finger corresponds to said calibration orientation.

Advantageously, the card may store an angle difference between the calibration orientation and the reference orientation and the card may use said biometric pattern to authorize usage of the second option only if the difference between the second orientation and the pattern orientation is equal to the angle offset plus the angle difference plus or minus the predefined tolerance value.

Advantageously, the card may initially associate said biometric pattern with a status initialized to a first value. The card may be configured to use said biometric pattern to authorize usage of said first option only if the status associated with said biometric pattern has been previously changed to a second value different from the first value, and, only in case of successful first checking during the calibration phase, the card may activate the biometric pattern by changing to said second value the status associated with said biometric pattern.

Advantageously, the biometric pattern may belong to a group comprising more than one biometric pattern, said group being stored in said memory and the card may select the biometric pattern from the group using the presented finger as a discriminator and assign said biometric pattern to said first option.

Advantageously, the card may be a payment card and said first option may be a debit payment and said second option may be credit payment.

An object of the present invention is a card comprising a body, a fingerprint sensor and a memory. The card is configured to record a biometric pattern in said memory during an enrollment phase. The card is configured to identify a pattern orientation of the biometric pattern. During a calibration phase subsequent to the enrollment phase, the card is configured:
to acquire a first biometric data of a presented finger of a user who is supposed to present said finger according to a calibration orientation with respect to the body;
to perform a first checking to verify that the first biometric data matches the biometric pattern and only in case of successful first checking, to identify a first orientation of the first biometric data and to compute an angle offset between the first orientation and the pattern orientation, and to uniquely assign the angle offset to the calibration orientation; and
wherein the card is configured to capture a second biometric data during a subsequent presentation of a finger, to perform a second checking to verify that the second biometric data matches the biometric pattern and only in case of successful second checking, to identify a second orientation of the second biometric data, the card is configured to consider that the second orientation corresponds to the calibration orientation only if the difference between the second orientation and the pattern orientation is equal to the angle offset plus or minus a predefined tolerance value.

Advantageously, during the enrollment phase the card may be configured to capture a plurality of biometric data, to build the biometric pattern from said plurality of biometric data and to identify the pattern orientation as the average orientation of the plurality of biometric data.

Advantageously, the card may comprise first and second options, said first option being uniquely associated with said calibration orientation and said second option being uniquely associated with a reference orientation different from the calibration orientation. The card may be configured to use said biometric pattern to authorize usage of the first option only if said second orientation of the subsequently presented finger corresponds to said calibration orientation.

Advantageously, the card may store an angle difference between the calibration orientation and the reference orientation and the card may be configured to use said biometric pattern to authorize usage of the second option only if the difference between the second orientation and the pattern orientation is equal to the angle offset plus the angle difference plus or minus the predefined tolerance value.

Advantageously, the biometric pattern may belong to a group comprising more than one biometric pattern, said group being stored in said memory and the card may be configured to select the biometric pattern from the group using the presented finger as a discriminator and to assign said biometric pattern to said first option.

Advantageously, the card may comprise a comparator engine configured to perform a comparison of the first biometric data with the biometric pattern and to identify the first orientation from both the first biometric data and the biometric pattern.

Advantageously, a first message referring to said first option may be written on the body of the card and indicates the calibration orientation.

### (Brief description of the drawings)

Other characteristics and advantages of the present invention will emerge more clearly from a reading of the following description of a number of preferred embodiments of the invention with reference to the corresponding accompanying drawings in which:
Fig. 1 shows an exemplary orientation of a biometric pattern captured during an enrollment phase by a sensor on a card;
Fig. 2 shows an exemplary orientation of a biometric data captured during a calibration phase by a sensor on a card according to an example of the invention;
Fig. 3 shows a first exemplary activation of an option linked to the orientation of a biometric data captured by a sensor on a card according to an example of the invention;
Fig. 4 shows a second exemplary activation of an option linked to the orientation of a biometric data captured by a sensor on a card according to an example of the invention;
Fig. 5 shows an exemplary flow diagram for managing a biometric pattern in a smart card according to an example of the invention;
Fig. 6 shows a diagram of architecture of a smart card according to an example of the invention;
Fig. 7 shows a detail of the body of the card showing particular inscriptions intended to guide the user according to an example of the invention; and
Fig. 8 shows the selection of a payment option according to an example of the invention.

### (Detailed description of the preferred embodiments)

The invention may apply to any type of smart card embedding a biometric sensor. The invention may apply to contact cards and to contactless cards. The biometric card may be a banking card, a ticket providing access to a mass transit, an access badge or an identity document for instance.

The invention is well suited for cards that embed a fingerprint sensor. The invention also applies to cards that embed other types of biometric sensor able to capture iris or a palm print for instance.

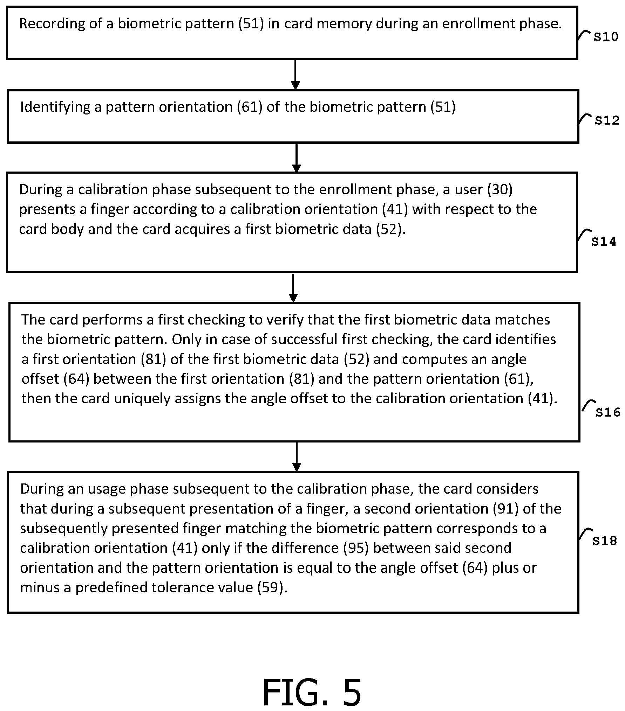

Figure 5 depicts an exemplary flow diagram for managing a biometric pattern in a smart card according to an example of the invention.

In this example, the smart card 10 is a biometric banking card intended to be used by its associated user (i.e. bank customer) for payment or cash withdrawal.

At step S10, a biometric pattern (51) is recorded in the card memory during an enrollment phase.

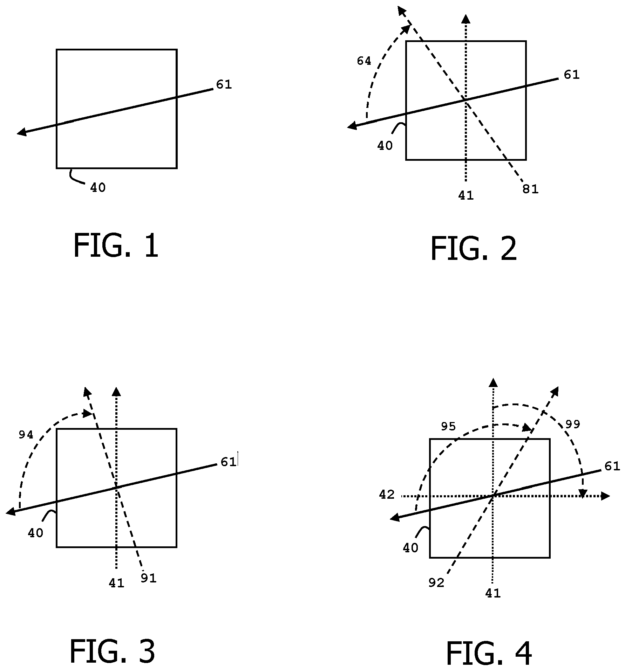

At step S12, the card identifies the pattern orientation 61 of the biometric pattern 51. More details are given below by reference to Figure 1. In some embodiments, step S12 may be merged with step S10.

At step S14, a calibration phase subsequent to the enrollment phase is performed. The user presents a finger according to a calibration orientation 41 with respect to the card body and the card acquires a first biometric data 52. More details are given below by reference to Figure 2.

In some embodiments, step S12 may be merged with step S14.

At step S16, the card performs a first checking to verify that the first biometric data 52 matches the biometric pattern 51. Only in case of successful first checking, the card identifies a first orientation 81 of the first biometric data 52 and computes an angle offset 64 between the first orientation 81 and the pattern orientation 61. Then the card uniquely assigns the angle offset to the calibration orientation 41.

At step S18, during an usage phase subsequent to the calibration phase, the card considers that during a subsequent presentation of a finger, a second orientation 91 of the subsequently presented finger matching the biometric pattern 51 corresponds to the calibration orientation 41 only if the difference 95 between said second orientation and the pattern orientation is equal to the angle offset 64 plus or minus a predefined tolerance value 59. More details are given below by reference to Figure 3.

Figure 1 depicts an exemplary orientation of a biometric pattern captured during an enrollment phase by a sensor on a card.

During a conventional enrollment phase, the biometric sensor 40 of the card captures a set of biometric data. The card builds a biometric pattern 51 (also named reference pattern) from the set of captured data then records the biometric pattern in its own internal non-volatile memory. Usually between 5 and 15 captured data are required to build a reliable biometric pattern, depending on the quality of the captured data. Depending on the features of the biometric sensor (like the size of the sensing area), more captured data may be required to build a reliable biometric pattern.

With most of the deployed biometric sensors, the acquisition of a fingerprint is performed when a finger is placed on the sensing surface of the sensor 40. The finger is assumed to be placed in a static position (no movement, no swipe).

In some embodiments, the card identifies the orientation 61 of the biometric pattern as the average orientation of the set of biometric data used to build the biometric pattern. Thus, the orientation 61 (also named pattern orientation) may correspond to the average direction of the presented fingers in case of fingerprint pattern.

It should be noted that a large number of biometric sensors have no internal reference axis and thus are unable to know whether the orientation 61 is parallel to a side of the sensor. In other words, the orientation 61 is intrinsic to the biometric pattern 51 and is not measured by reference to an axis of the sensor. According to some embodiments of the invention, the card uses the pattern orientation 61 as a reference axis.

Figure 2 shows an exemplary orientation of a biometric data captured during a calibration phase by a sensor on a card according to an example of the invention.

During a calibration phase subsequent to the enrollment phase, a user of the card is asked to present a finger according to the calibration orientation 41 with respect to the card body. Responsive to the finger presentation, the card acquires a biometric data 52 of the presented finger. Then the card performs a checking to verify that the acquired biometric data matches the biometric pattern 51. Only in case of successful checking, the card identifies a first orientation 81 of the acquired biometric data 52 and computes an angle offset 64 between the first orientation 81 and the pattern orientation 61. Then the card uniquely assigns the angle offset 64 to the calibration orientation 41.

It should be noted that the card computes an angle difference between the direction/orientation of an acquired biometric data and the direction/orientation of an enrolled biometric data. The angle computation can be performed by the entity embedding the match algorithm.

In some embodiments, the card may update the biometric pattern 51 with biometric data captured during a phase of authentication of the user. In this case, the card may update the pattern orientation 61 and/or the angle offset 64 accordingly.

Figure 3 depicts a first exemplary activation of an option linked to the orientation of a biometric data captured by a sensor on a card according to an example of the invention.

Once the calibration phase has been carried out, the card is ready to operate transactions involving its biometric sensor.

In the example of Figure 3, the calibration orientation 41 corresponds to a direction that the user must respect when presenting their finger to trigger a specific action in the card.

When the card user wants to activate/trigger the specific action in the card, the user presents a finger to the card sensor 40. The card captures a new biometric data and perform a new checking to verify that the new biometric data matches the biometric pattern. Only in case of successful checking, the card identifies the orientation 91 of the new biometric data and computes an angle difference 94 between the orientation 91 and the pattern orientation 61. Then the card considers that the orientation 91 corresponds to the calibration orientation 41 only if the angle difference 94 is equal to the angle offset 64 plus or minus a predefined tolerance value 59.

The predefined tolerance value 59 may be set in a range: Zero to 30 degrees. If the card comes to the conclusion that the direction 91 of the new biometric data corresponds to the calibration orientation 41, then the card activates the targeted specific action associated to the calibration orientation.

In some embodiments, the card comprises first and second options (or features or commands or settings), the first option being uniquely associated with the calibration orientation 41 and the second option being uniquely associated with a reference orientation 42 different from the calibration orientation. The card uses the biometric pattern to authorize usage of the first option only if the orientation of an acquired biometric data corresponds to the calibration orientation 41. Similarly, the card uses the biometric pattern to authorize usage of the second option only if the orientation of an acquired biometric data corresponds to the reference orientation 42.

It should be noted that in these embodiments, even if the user presents a finger that matches the enrolled pattern, the card may deny to activate any option/feature if the direction of the presented finger does not correspond to any orientation associated with the options in the card.

Figure 4 depicts a second exemplary activation of a second option linked to the orientation of a biometric data captured by a sensor on a card according to an example of the invention.

In some embodiments, the card stores an angle difference 99 between the calibration orientation 41 (associated with the first option) and the reference orientation 42 (associated with the second option). The angle difference 99 may be recorded into the card memory during a personalization phase before the enrollment phase. In the example of Figure 4, the angle difference 99 is equal to 90 degrees. The card captures a new biometric data and performs a new checking to verify that the new biometric data matches the biometric pattern. Only in case of successful checking, the card identifies the orientation 92 of the new biometric data and computes an angle difference 95 between the orientation 92 and the pattern orientation 61. Then the card authorizes usage of the second option only if the angle difference 95 is equal to the angle offset 64 plus the angle difference 99 plus or minus the predefined tolerance value 59.

In some embodiments, the card may manage a status assigned to the biometric pattern in order to control enabling of the use of the biometric pattern. The card may initially associate the enrolled biometric pattern 51 with a status initialized to a first value that can be "inactivated" for instance.

Only in case of successful checking during the calibration phase, the card activates the biometric pattern 51 by changing to a second value the status associated with said biometric pattern. The second value is different from the first value. The second value can be "activated" for instance. The card may be configured to use the biometric pattern to authorize usage of a card feature/option only if the status associated with the biometric pattern has been previously changed to the second value. By doing so, the card ensures that the calibration phase has been properly executed before allowing using the biometric pattern 51 during a transaction.

In some embodiments, the card may comprise two or more enrolled biometric patterns corresponding to as many fingers. In other words, the biometric pattern 51 may belong to a group comprising more than one biometric pattern. The card may select the biometric pattern 51 from the group using the presented finger as a discriminator and assign the biometric pattern 51 to a specific option/feature during the calibration phase. For instance, at the end of the calibration phase, the card may be set to authorize usage of a first option 11 only when a first finger is presented according to a first direction and to authorize usage of a second option 12 only when another finger is presented according to another specific direction.

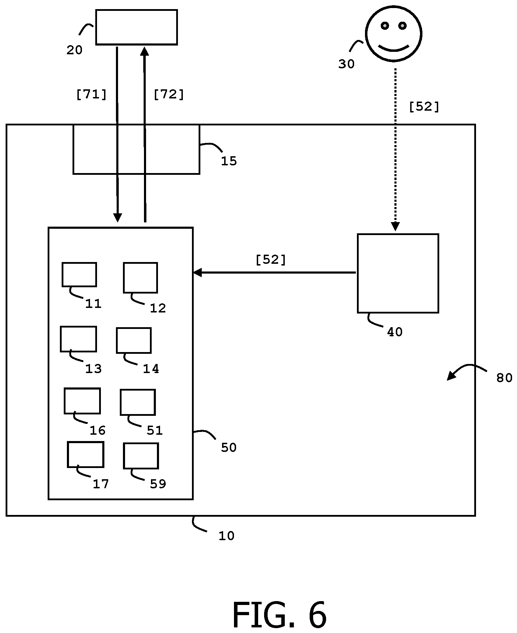

Figure 6 depicts a diagram of architecture of a smart card according to an example of the invention.

In this example, the card 10 is a payment card allocated to a user 30.

The biometric card 10 comprises a body 80, a secure chip 50 (also called secure element) and a fingerprint sensor 40 connected to the secure chip. The smart card 10 comprises a communication interface 15 that can be designed to exchange data with outside in contact or contactless mode. The communication interface 15 is connected to the secure element 50.

The secure chip 50 comprises a processor and a non-volatile memory (not shown). The non-volatile memory stores an operating system which includes software instructions that are executed by the processor to perform the features of the secure chip.

The card may comprise a sensor controller placed between the secure chip 50 and the biometric sensor 40. Such a sensor controller may be a microcontroller unit like a MCU. Alternatively, the secure chip 50 may act as a controller of the biometric sensor 40.

In the example of Figure 6, the card 10 is coupled to a reader 20 which may be embedded in a Point-Of-Sale (POS) device and the secure element 50 is based on a conventional smart card chip with additional features. The secure element 50 is able to contribute to a banking transaction with an external machine. For instance, the transaction may be a payment transaction or cash withdrawal. The secure element 50 may comprise a reference biometric pattern 51 previously enrolled by the user 30 during an enrollment phase.

The secure element 50 may comprise a biometric algorithm 16 (matching algorithm) aiming at comparing the reference biometric pattern 51 with a biometric data 52 captured by the sensor 40.

The card comprises at least two options (or configuration data). In the example of Figure 6, the card 10 comprises three options 11, 12 and 13.

The card is configured to receive a request 71 (from the reader) which belong to a transaction and to generate and send a message 72 in response to the request 71. The content of the message 72 may depend on the option selected by the cardholder.

The card comprises a comparator engine 17 adapted to identify the pattern orientation 61 of the biometric pattern. In some embodiments, during the enrollment phase the comparator engine 17 is configured to capture a plurality of biometric data, to build the biometric pattern 51 from the plurality of captured biometric data and to identify the pattern orientation 61 as the average orientation of the plurality of biometric data.

During a calibration phase subsequent to the enrollment phase, the comparator engine 17 is configured to acquire a first biometric data 52 of a finger presented by the user 30 who is supposed to present the finger according to the calibration orientation 41 with respect to the body. The comparator engine is configured to perform a checking to verify that the first biometric data 52 matches the biometric pattern 51. Only in case of successful checking, the comparator engine is configured to identify a first orientation 81 of the first biometric data 52, to compute an angle offset 64 between the first orientation 81 and the pattern orientation 61, and to uniquely assign the angle offset 64 to the calibration orientation 41. The comparator engine 17 stores in the card memory a calibration data 14 reflecting both the value of the angle offset 64 and the association between the angle offset 64 and the calibration orientation 41.

After the calibration phase, the comparator engine 17 is configured to capture a second biometric data during a subsequent presentation of a finger, to perform a second checking to verify that the second biometric data matches the biometric pattern 51 and only in case of successful second checking, to identify a second orientation 91 of the second biometric data. The comparator engine is configured to consider that the second orientation 91 corresponds to the calibration orientation 41 only if the difference 94 between the second orientation 91 and the pattern orientation 61 is equal to the angle offset 64 plus or minus a predefined tolerance value 59. The predefined tolerance value 59 may be in the range 0 to 35 degrees for instance.

In some embodiments, the card may behave according to at least first and second options, the first option being uniquely associated with the calibration orientation 41 and the second option being uniquely associated with a reference orientation 42 different from the calibration orientation. For instance, the card may be a payment card, the first option may be a debit payment and the second option may be a credit payment. The comparator engine 17 may be configured to use the biometric pattern to authorize usage of the first option only if the orientation/direction of a biometric data captured from a subsequently presented finger corresponds to the calibration orientation 41 (assuming a successful match between the biometric pattern and the newly captured biometric data).

In some embodiments, the card memory may comprise an angle difference 99 between the calibration orientation 41 and the reference orientation 42. The comparator engine 17 may be configured to consider that the orientation 92 of a new biometric data captured from a newly presented finger corresponds to the reference orientation 42 only if the difference 95 between the orientation 92 of a new biometric data and the pattern orientation 61 is equal to the angle offset 64 plus the angle difference 99 plus or minus the predefined tolerance value 59.

In some embodiments, the card memory may comprise a group of two or more enrolled biometric patterns corresponding to as many fingers of one or more users. The comparator engine 17 may be configured to select the biometric pattern 51 from the group using the presented finger as a discriminator and to assign the biometric pattern 51 to one of the options available in the card.

In some embodiments, the card may provide a feedback directly to the cardholder to indicate which card option/feature has been selected. For instance, the card body may include as many light sources (like a LED) as available configured orientations/options and turns on the light source associated with the selected option. The feedback may also be an audio signal.

In some embodiments, the card may provide a feedback indirectly to the cardholder by sending to the coupled reader 20 a reference of the selected option so that the reader may inform the cardholder of the selected option through its own man machine interface (like a display or a light source) or by printing a paper.

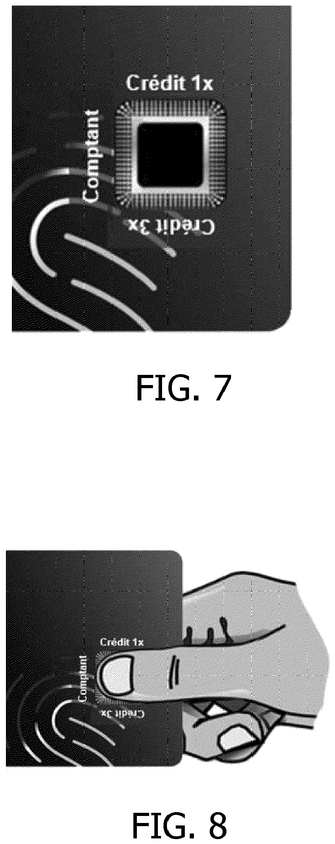

Figure 7 depicts a detail of the body of the card showing particular inscriptions intended to guide the user according to an example of the invention. In this example, the cardholder may select one option among three available options. The first orientation may correspond to a "debit payment" option, the second orientation may correspond to a "credit in 1 payment" option and the third orientation may correspond to a "credit in 3 payments" option.

When the "debit payment" option is selected, the payment transaction will result in deducting money directly from the bank account associated with the card.

When the "credit in 1 payment" option is selected, the payment transaction will result in opening a credit line so that money will be deducted at the end of the month.

When the "credit in 3 payments" option is selected, the payment transaction will result in opening a credit line so that money will be deducted in three times from the bank account associated with the card.

In the example of Figure 7, the message associated with the first option (i.e. with the first orientation) is "Comptant" (which stands for Debit payment in French), the message associated with the second option (i.e. with the second orientation) is "Credit 1x" and the message associated with the third option (i.e. with the third orientation) is "Credit 3x".

As shown at Figure 7 the cardholder has placed a finger according to the first orientation so as to select the "debit payment" option. Assuming that the user previously enrolled their finger by using this particular orientation, the difference between the orientation of the presented finger and that of the enrolled finger is small (a few degrees more or less) .

Although the method has been described for a banking card, some embodiments of the invention may apply to other types of smart card. For example, the card may be an access control badge or an identity document.

Thanks to some embodiments of the invention, it is possible to dynamically adapt the configuration of a transaction in response to the selection of an option by the cardholder.

Thanks to some embodiments of the invention, the user can run the enrollment phase without to take care of the orientation of the presented finger. Thus enrollment phase does not need to be monitored to ensure user present their finger in an appropriate orientation. Consequently, the enrollment may be done outside bank premises, at home for instance.

Thanks to some embodiments of the invention, when the user enrolled two or more fingers in the card, the user may associate a specific finger to a target card option/feature through the calibration phase so that only one combination finger/orientation of finger allows to trigger the target card option/feature after the calibration phase.

Thanks to some embodiments of the invention, the cardholder can smoothly select a specific option/configuration of the card by presenting a relevant finger according to a target orientation and reduce the selection error compared to conventional biometric cards.

The invention is not limited to the described embodiments or examples. In particular, the described examples and embodiments may be combined.

The biometric smart card may embed a large number of options and the user may select any of these options by using some embodiments of the invention.

## Claims

1. A method for managing a biometric pattern (51) in a card (10) comprising a body, a fingerprint sensor (40) and a memory,
wherein the method comprises the steps:
- the card records (S10) the biometric pattern in said memory during an enrollment phase;
- the card identifies (S12) a pattern orientation (61) of the biometric pattern (51);
- during a calibration phase subsequent to the enrollment phase:
- a user (30) is asked to present a finger according to a calibration orientation (41) with respect to said body and the card acquires (S14) a first biometric data (52) of a presented finger;
- the card performs a first checking to verify that the first biometric data matches the biometric pattern and only in case of successful first checking, the card identifies a first orientation (81) of the first biometric data (52) and computes an angle offset (64) between the first orientation (81) and the pattern orientation (61), then the card uniquely assigns (S16) the angle offset to the calibration orientation (41);
- the card being configured to capture a second biometric data during a subsequent presentation of a finger, to perform a second checking to verify that the second biometric data matches the biometric pattern and only in case of successful second checking, to identify a second orientation (91) of the second biometric data, the card being configured to consider that the second orientation (91) corresponds to the calibration orientation (41) only if the difference (94) between the second orientation (91) and the pattern orientation (61) is equal to the angle offset (64) plus or minus a predefined tolerance value (59).

2. The method according to claim 1, wherein during the enrollment phase the card captures a plurality of biometric data, builds the biometric pattern (51) from said plurality of biometric data and wherein the card identifies the pattern orientation (61) as the average orientation of the plurality of biometric data.

3. The method according to claim 1, wherein the card comprises first and second options (11, 12), wherein said first option is uniquely associated with said calibration orientation (41), wherein said second option is uniquely associated with a reference orientation (42) different from the calibration orientation and wherein the card uses said biometric pattern to authorize usage of the first option only if said second orientation (91) of the subsequently presented finger corresponds to said calibration orientation (41).

4. The method according to claim 3, wherein the card stores an angle difference (99) between the calibration orientation (41) and the reference orientation (42) and wherein the card uses said biometric pattern to authorize usage of the second option only if the difference (95) between the second orientation (92) and the pattern orientation (61) is equal to the angle offset (64) plus the angle difference (99) plus or minus the predefined tolerance value (59).

5. The method according to claim 3, wherein the card initially associates said biometric pattern (51) with a status initialized to a first value,
wherein said card is configured to use said biometric pattern to authorize usage of said first option only if the status associated with said biometric pattern has been previously changed to a second value different from the first value, and
wherein only in case of successful first checking during the calibration phase, the card activates the biometric pattern by changing to said second value the status associated with said biometric pattern.

6. The method according to claim 3, wherein said biometric pattern (51) belongs to a group comprising more than one biometric pattern, said group being stored in said memory and wherein the card selects the biometric pattern (51) from the group using the presented finger as a discriminator and assigns said biometric pattern (51) to said first option (11).

7. The method according to claim 3, wherein the card is a payment card and wherein said first option is a debit payment and said second option is a credit payment.

8. A card (10) comprising a body, a fingerprint sensor (40) and a memory, wherein the card is configured to record a biometric pattern (51) in said memory during an enrollment phase;
wherein the card is configured to identify a pattern orientation (61) of the biometric pattern (51),
wherein, during a calibration phase subsequent to the enrollment phase, the card is configured:
to acquire a first biometric data (52) of a presented finger of a user (30) who is supposed to present said finger according to a calibration orientation (41) with respect to the body;
to perform a first checking to verify that the first biometric data matches the biometric pattern and only in case of successful first checking, to identify a first orientation (81) of the first biometric data (52) and to compute an angle offset (64) between the first orientation (81) and the pattern orientation (61), and to uniquely assign the angle offset to the calibration orientation (41); and
wherein the card is configured to capture a second biometric data during a subsequent presentation of a finger, to perform a second checking to verify that the second biometric data matches the biometric pattern and only in case of successful second checking, to identify a second orientation (91) of the second biometric data, the card is configured to consider that the second orientation (91) corresponds to the calibration orientation (41) only if the difference (94) between the second orientation (91) and the pattern orientation (61) is equal to the angle offset (64) plus or minus a predefined tolerance value (59).

9. The card according to claim 8, wherein during the enrollment phase the card is configured to capture a plurality of biometric data, to build the biometric pattern (51) from said plurality of biometric data and to identify the pattern orientation (61) as the average orientation of the plurality of biometric data.

10. The card according to claim 8, wherein the card comprises first and second options (11, 12), wherein said first option is uniquely associated with said calibration orientation (41), wherein said second option is uniquely associated with a reference orientation (42) different from the calibration orientation and wherein the card is configured to use said biometric pattern to authorize usage of the first option only if said second orientation (91) of the subsequently presented finger corresponds to said calibration orientation (41).

11. The card according to claim 10, wherein the card stores an angle difference (99) between the calibration orientation (41) and the reference orientation (42) and wherein the card is configured to use said biometric pattern to authorize usage of the second option only if the difference (95) between the second orientation (92) and the pattern orientation (61) is equal to the angle offset (64) plus the angle difference (99) plus or minus the predefined tolerance value (59).

12. The card according to claim 10, wherein said biometric pattern (51) belongs to a group comprising more than one biometric pattern, said group being stored in said memory and wherein the card is configured to select the biometric pattern (51) from the group using the presented finger as a discriminator and to assign said biometric pattern (51) to said first option (11).

13. The card according to claim 10, wherein the card is a payment card and wherein said first option is a debit payment and said second option is a credit payment.

14. The card according to claim 9, wherein the card comprises a comparator engine (17) configured to perform a comparison of the first biometric data (52) with the biometric pattern (51) and to identify the first orientation (81) from both the first biometric data (52) and the biometric pattern (51).

15. The card according to claim 9, wherein a first message referring to said first option is written on the body and indicates the calibration orientation (41).
